# EUROPEAN PATENT SPECIFICATION

(11) **EP 0 856 928 B1**
(45) Date of publication and mention of the grant of the patent: **16.03.2005**
(21) Application number: 98200212.3
(22) Date of filing: 26.01.1998
(51) Int. Cl.: H02B 5/00

(54) **High-voltage electrical conductor assembly**
Hochspannungsleitervorrichtung
Assemblage de conducteur électrique à haute tension

(43) Date of publication of application: 05.08.1998
(73) Proprietor: ABB Power Technologies S.p.A., 20124 Milano (IT)
(72) Inventor: Malaguti, Massimo, 20070 Dresano (Milano) (IT); Abisso, Alberto, 73100 Lecce (IT); d'Amato, Angelo, 20144 Milano (IT)
(74) Representative: Giavarini, Francesco

(56) References cited:
- DE-C- 911 389
- GB-A- 1 071 814
- US-A- 1 884 580
- US-A- 2 717 287

## Description

The invention relates to a high-voltage electrical conductor assembly for connecting several lines to transformers.

It is known that, in electrical high-voltage stations when several lines and/or several transformers are present, the various line bays and the transformer bays are connected together by means of busbars. The busbars are kept above the level of the connections present between the bays by means of special supports.

Typically when the busbars are formed as conductors, the supports consist of various support structures between which the conductors are tensioned.

In the case, however, of busbars formed by means of tubes, the supports are constructed with special steel network structures on top of which insulators supporting the busbars are mounted.

The line bays and the transformer bays are electrically connected to the busbars by means of rigid or flexible conductors. These conductors join each clamp of the line bay to the busbars and therefore to the similar clamp of the transformer bay.

The existing structures for supporting the busbars and the presence of the rigid or flexible conductors connecting together the various clamps of the bays make the present constructional designs complex and costly.

Moreover, in the existing stations, the support components, the busbars and the conductors, in particular the rigid conductors form a hyperstatic structure. The constructional tolerances of the various parts of this structure, which cannot be eliminated, and the imprecision in mounting of the parts give rise to considerable assembly difficulties which increase the times required for construction of the stations and reduce the reliability thereof.

The presence, moreover, of a large number of insulators supporting the busbars results in a reduction in the likelihood of the plant being able to withstand the loads due to overvoltages, in particular in a polluted environment.

An example of a known high voltage electrical conductor assembly is described in patent DE911389C. This document discloses a high-voltage bus bars system in which the bus bars are connected, by means of conducting supporting rods, to two disconnectors coupled to insulators.

Another example of prior art high-voltage electrical conductor assemblies is given in patent GB-A-1071814. This document discloses a bus bars system which is connected to branch circuits through multi-pole isolating switches; the terminal of each isolating switch is supported from an earthed supporting structure by an insulating support member which is also the sole support for the bus bar in the region of the associated switch pole. The connection between each bus bar and the corresponding insulating support is accomplished by a conductive pillar.

The main object of the present invention is to overcome the drawbacks of the prior state of the art listed above and in particular to simplify the busbar support structure.

A second object of the invention is simplification of the assembly operations, a consequent reduction in the labour time and greater reliability of the station.

The object of the invention is achieved by means of a high-voltage electrical conductor assembly for connecting several lines to transformers, comprising self-supporting busbars (R, S, T), conducting rods (1, 2, 3) for supporting said busbars (R, S, T), and support insulators (8), in which each busbar (R, S, T) is connected to two conducting rods (1, 2, 3), said conducting rods (1, 2, 3) being connected on one side to said support insulators (8) and at their free ends with said busbars (R, S, T), characterized in that orientable and adjustable articulated joints are provided at the connection points between the insulators (8) and the conducting rods (1, 2, 3) as well as between the conducting rods (1, 2, 3) and the busbars (R, S, T).

Advantageously the busbars are tubular and parallel with one another so as to be self-supporting and easy to support at a suitable distance from the ground and maintain the required safety zones between the various phases.

An advantageous modularity and constructional simplicity is obtained when the diameter of the cross-section of the busbars coincides with the diameter of the cross-section of the supporting rods.

In order to form an isostatic busbar support structure, for each bay, each busbar is connected by means of articulated joints to two support rods.

Advantageously the rods supporting a busbar and the insulators to which the rods are connected lie in the same plane transverse to the busbar in order to make the structure of the bay more compact and simple.

With further advantage, the support structures are aligned with each other in the bay.

In an advantageous embodiment of the invention, while maintaining the required safety zones between the phases, the busbars are arranged, viewed in cross-section, at the vertices of an isosceles triangle.

Advantageously the busbars outside the system are aligned vertically with the insulators.

In an advantageous embodiment, the orientable and adjustable articulated joints consist of clamps made of conductive material.

Advantageously the clamps have a roughly L-shaped body, having externally and longitudinally seats for the busbars and seats for the rods which are mutually perpendicular and having, connected facing the seats, jaws provided with seats for clamping the busbars and seats for clamping the rods.

In an advantageous embodiment of the articulated joints for connecting the supporting rods to the insulators, the rods are connected to connections fixed to the terminals of the insulators and formed by angular fastening structures connected on one side to the terminal and on the opposite side to plates for fixing the rods and to electrical contact pins.

In order to arrange the busbars in the desired positions, the rods are welded onto the plates oriented towards the busbar to be supported.

In order to simplify the electrical connection to the means for connection to the lines and the transformer, the terminal pins are connected transversely to the side of the fastening structure and are supported by angle-bars.

In order to ensure correct clamping between the connection components and consequent good electrical transmission, stud bolts connect with pressure the plates, the fastening structures and the contact pins.

Advantageously, in order to strengthen the connections of the rods to the terminals of the insulators, the fastening structure has stiffening and reinforcing gussets.

The advantages of the present invention are to be found mainly in the simplified structure of the busbar support systems. Owing to the presence of a smaller number of insulators inserted between the conductors and the earthed parts of the system, the resistance to overvoltage loads originating inside the electrical system or due to lightning may be increased.

A second advantage consists moreover in the fact that the busbar support structure forms an isostatic system. The result is that, for any load condition of the busbars (including horizontal thrusts due to the wind) the busbar support structure transmits to the insulators only direct forces such as the lines joining the articulated joints and the terminals of the insulators. The proposed ingenious arrangement of the busbars therefore allows the load application arms to be reduced. Moreover, the busbar support structure, since it does not assume any hyperstatic conditions, is not subject to stresses arising from heat expansion.

One advantage is determined by the fact that the presence of orientable and adjustable articulated joints allows the bays to be precisely and rapidly assembled even when there are high constructional tolerance values of the system parts.

An advantage lies moreover in the fact that the arrangement of the busbars proposed by the invention allows smaller dimensions and a reduction in the mutual electrodynamic actions between the busbars to be obtained.

The subject-matter, as conceived in accordance with the present invention, will be described in more detail below and illustrated in an embodiment provided solely by way of example in the accompanying drawings in which:
Figure 1 shows schematically an axonometric view of the structure supporting three busbars present in a bay;
Figure 2 shows schematically a cross-sectional view of the structure supporting three busbars;
Figure 3 shows in greater detail the same cross-sectional view of Figure 2;
Figure 4 shows a view along the section A-A of Figure 3;
Figure 5 shows an axonometric view of a detail of the articulated joint connecting a busbar to the support rods;
Figure 6 shows a side view of one of the articulated joints according to Figure 5;
Figure 7 shows a plan view of the articulated joint according to Figure 6;
Figures 8 and 9 show the side and front views of a connection supporting a rod oriented obliquely upwards;
Figures 10 and 11 show the side and front views of a connection supporting a rod oriented vertically; and
Figures 12 and 13 show the side and front views of a connection supporting a rod oriented obliquely downwards.

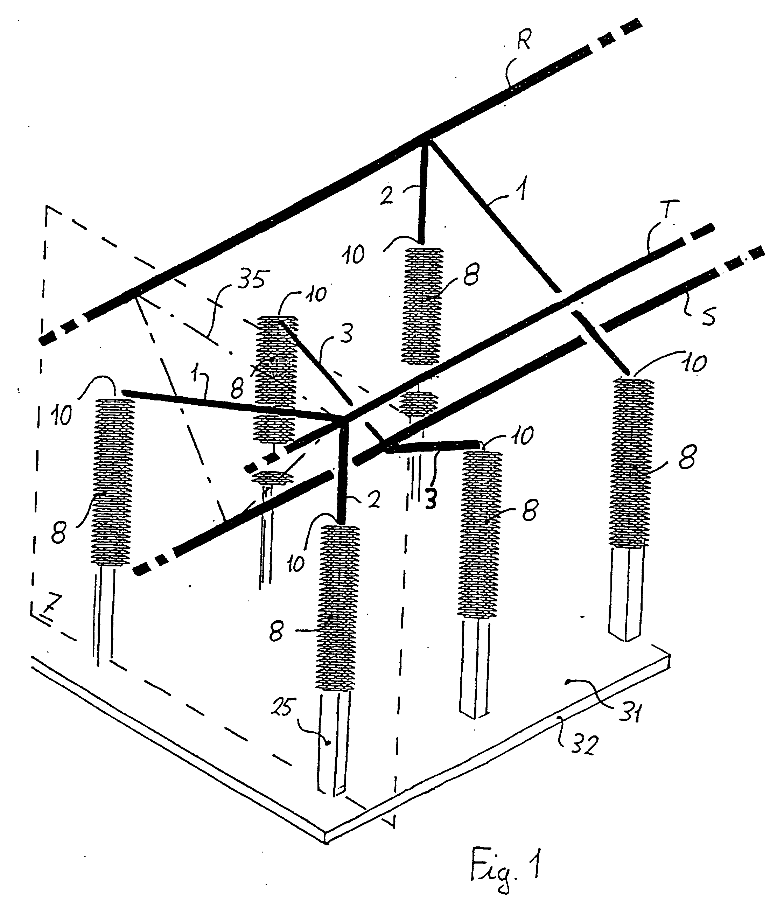

Figure 1 shows one of the connections between a line bay and the corresponding transformer bay (not shown).

Three tubular busbars R, S, T are each supported by two conducting support rods 1, 2, 3. In the case of each busbar, for example the busbar T for the electrical phase T, the respective support rods 1, 2 lie in a plane 7 which is transverse with respect to the busbar T.

Two insulators 8 are located vertically in the same plane 7. The upper terminals 10 of the insulators 8 are connected to the rods 1, 2, 3. At the bottom the insulators 8 are connected to structures 25, illustrated for the sake of simplicity as columns, for supporting and separation from the upper surface 31 of a base 32.

For the sake of a rational construction, the structures 25 supporting the insulators 8 are aligned in threes for each bay in two parallel rows.

Advantageously the distance of the two parallel rows in which the support structures 25 are arranged corresponds to the distance between the two external busbars R, T.

In particular the three busbars R, S, T are arranged between two rows of insulators 8 at the vertices of an isosceles triangle 35 (configuration called NABLA).

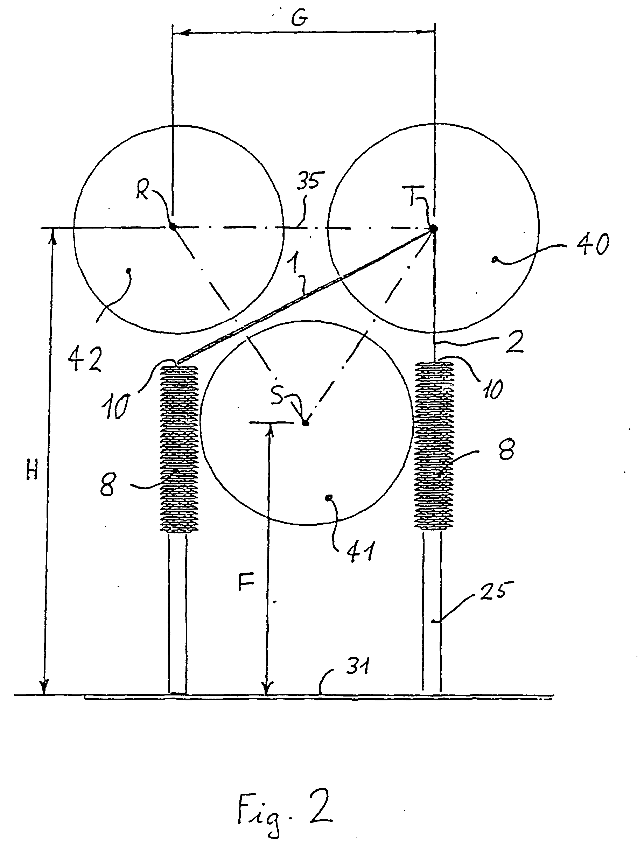

From Figure 2 it is possible to see how the NABLA arrangement of the busbars R, S, T has, together with the support structure, very small dimensions.

For the sake of clarity of the illustration, only the rods 1, 2 supporting the busbar T for the electrical phase T are shown.

The distances G, F, H at which the support structures 25, the insulators 8 and hence the busbars R, S, T are arranged from each other therefore allow a suitable electrical safety distance or clearance zone 40, 41, 42 to be maintained between the various busbars R, S, T and the electrically earthed parts.

From Figures 1 and 2 it can be seen how the rods 1, 2, 3 supporting the busbars R, S, T are structural components and electrical connection components. The rods, in fact, form the electrical connection between the busbars R, S, T)and the conducting means, not shown, for connection to the lines and the transformers, such as, for example, isolators and switches.

The rods 1, 2, 3 are therefore at the same voltage as the supported busbar R, S, T.

Consequently in an advantageous embodiment of the invention, the support busbars 1, 2, 3 are tubular and rectilinear. It is possible in this way to support, for example the busbar T for the electrical phase T, without encroaching upon the safety zones 41, 42 of the other busbars R, S.

From a structural point of view the support rods 1, 2, 3 form an isostatic structure defined as a three-hinged arch.

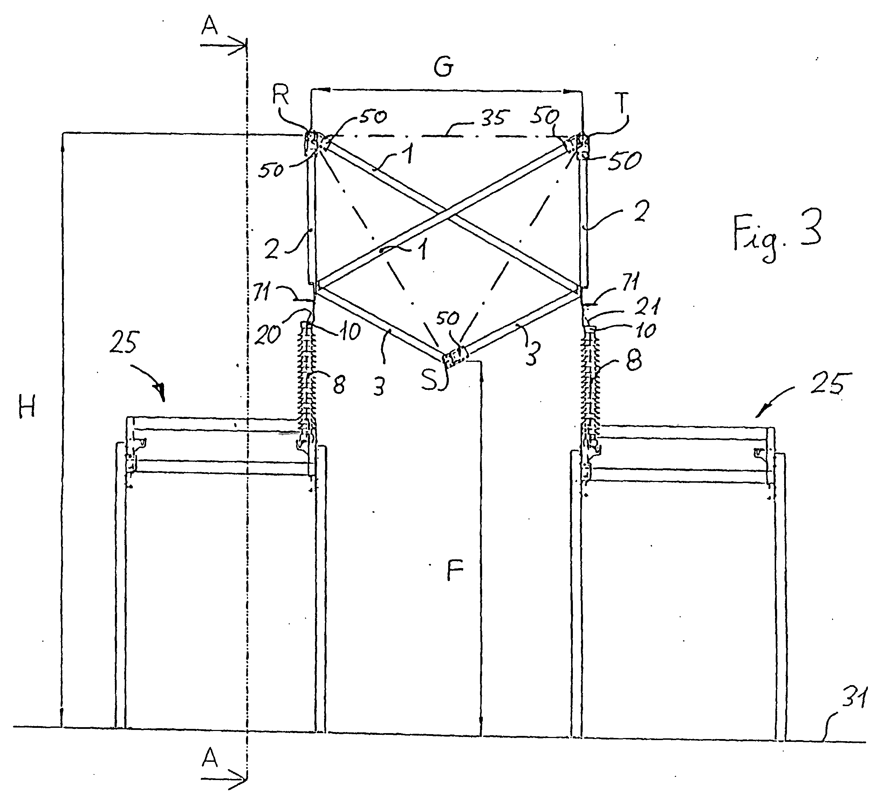

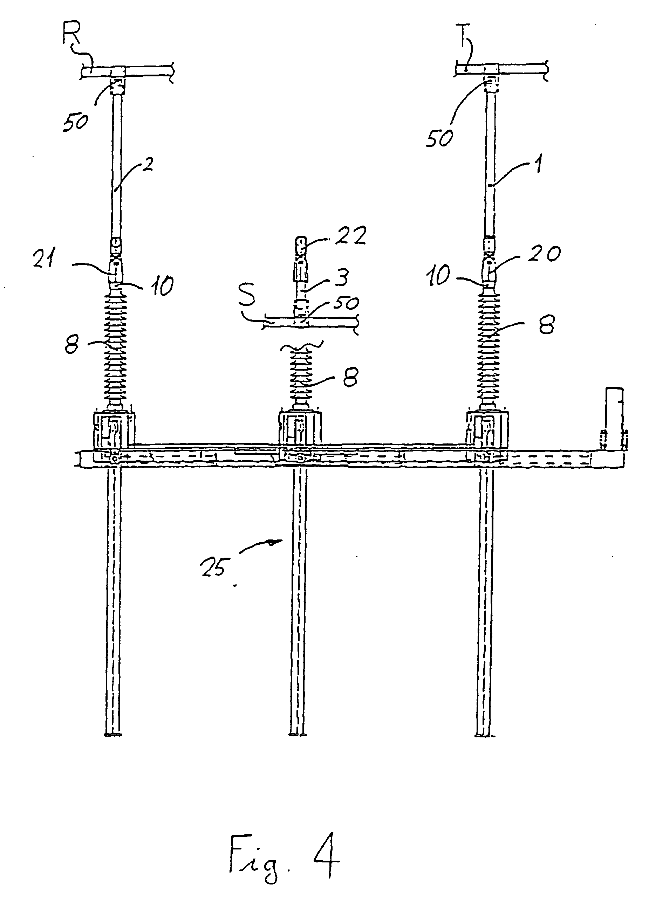

From Figures 3 and 4 it can be seen in greater detail how the articulated joints for connection of the rods 1, 2, 3 to the busbars R, S, T and to the terminals 10 of the insulators 8 are formed.

In particular the rods 1, 2, 3 are connected to the busbars R, S, T with modular clamps, indicated in their entirety by 50.

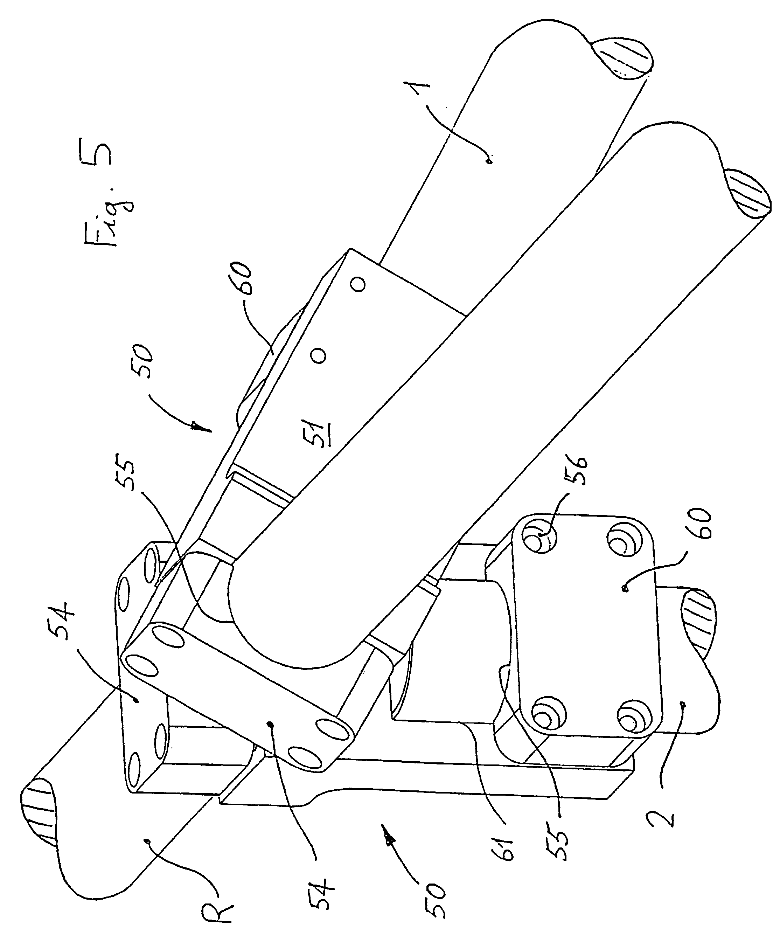

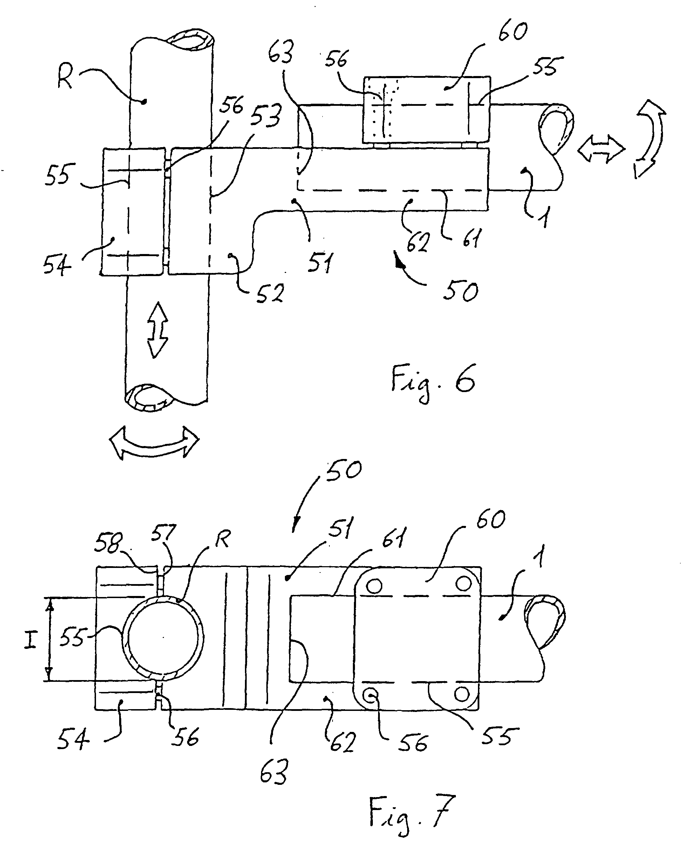

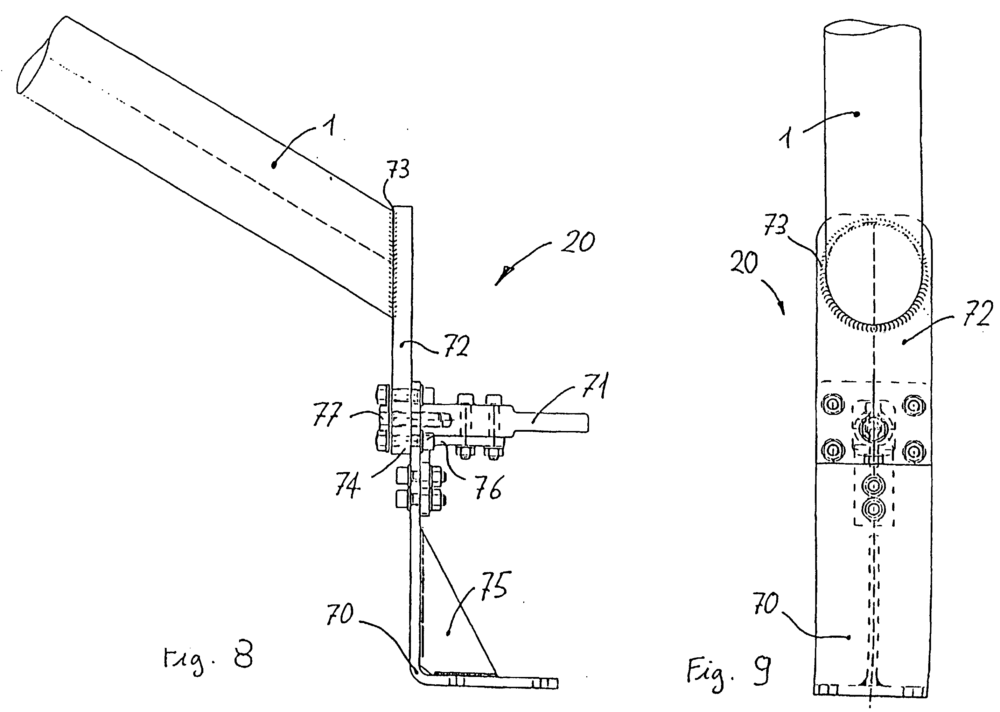

From Figures 5, 6 and 7 it is possible to see the constructional details of the clamp 50. In particular the clamps 50 connecting the rods 1, 2 to the busbar (R) for the electrical phase R are shown.

The clamp consists of a prismatic, roughly L-shaped body 51.

The short side 52 of the body 51 of the clamp 50 has, externally and with the same length as the side 52, a semi-cylindrical seat 53.

The diameter of the semi-cylindrical seat 53 coincides with the diameter of the busbar (R) to be fixed with the clamp 50.

A jaw 54 is situated facing the semi-cylindrical seat 53. The jaw 54 has a roughly parallelepiped shape and has a width and a depth equal to the short side 52 of the body 51 of the clamp 50.

The jaw 54 has a seat 55 with a cross-section in the form a circle arc facing the seat 53 of the body 51 of the clamp 50. The width I of the seat 55 is slightly smaller than the diameter of the busbar R.

Tightening of the jaw 54 onto the body 51 of the clamp 50, by means of screw means 56, leaves the lateral surfaces 57, 58 of the seats 53, 55 such that they do not make contact with each other, ensuring clamping of the busbar R in the clamp 50.

Similarly the support rod 1 is clamped in the clamp 50.

Advantageously a jaw 60, similar to the jaw 54 clamping the busbar R, grips by means of screw means 56 the rod 1 in a seat 61 formed externally and longitudinally with respect to the side 62 along the body 51 of the clamp 50. The seat 61 for the rod 1 is perpendicular to the busbar R.

The seat 61 extends only over part of the side 62 along the clamp 50, having a perpendicular abutment surface 63 for the rod 1.

Advantageously, the support rods 1, 2, 3 have cross-sections with the same diameter as do also the busbars R, S, T. In this way it is possible to use identical clamps 50 for all the hinges connecting together the rods 1, 2, 3 and the busbars R, S, T.

Since the support rods 1 have the additional task of electrical conduction, the clamp 50 is made of conductive material.

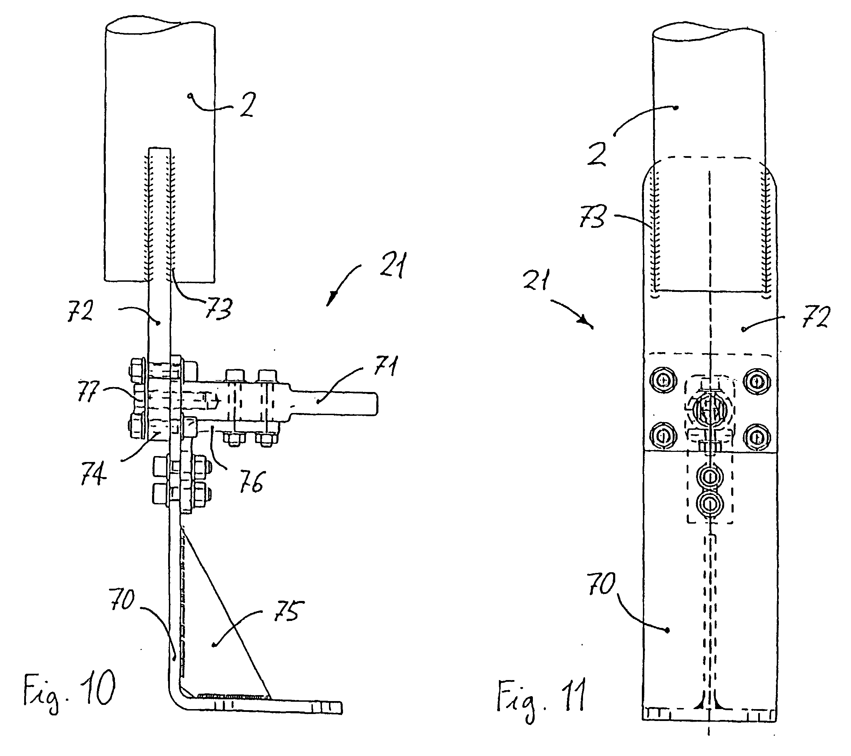

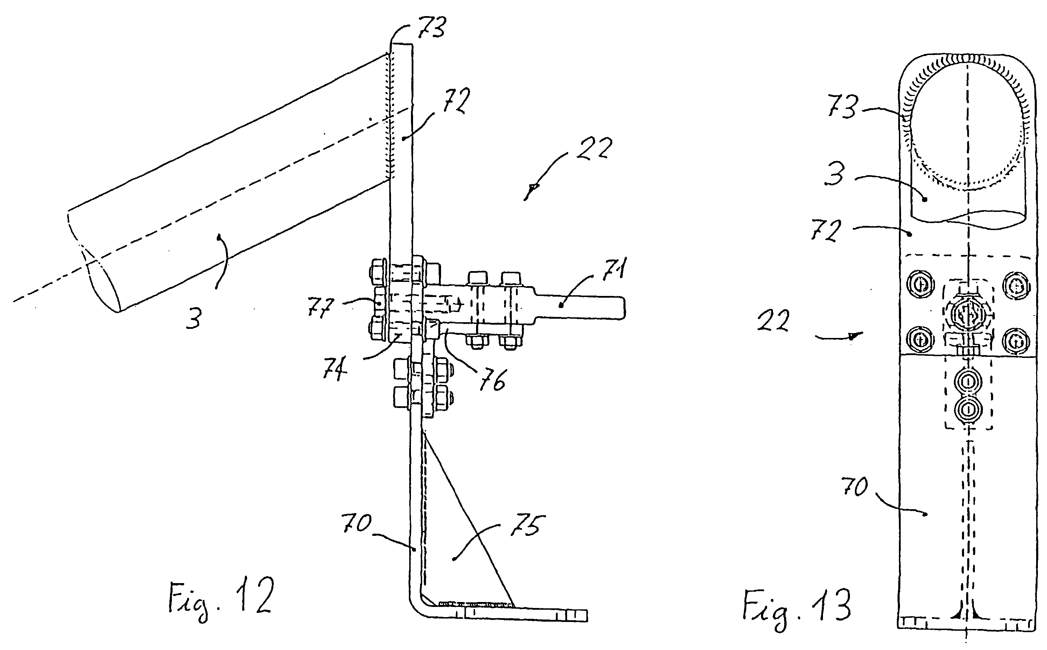

In Figures 8 to 13 it is possible to see three different types of conductive connection - indicated in their entirety by 20, 21, 22 - of the rods 1, 2, 3 to the terminals 10 of the insulators 8.

The three types of connection 20, 21, 22 have a same angular structure 70 for fastening to terminal of the insulator, not shown, and a same pin 71 for contact with the means for electrical connection to the lines and to the transformers, also not shown.

The connections 20, 21, 22 differ in terms of the type of system for fastening to the rods 1, 2, 3 supporting the busbars (not shown).

Depending on whether the busbar is to be supported either above the insulator or between the insulators, a connection 20 oriented obliquely upwards or vertical 21, or a connection 22 oriented obliquely downwards is provided.

The rod 1, 2, 3 is fixed to a plate 72, for example by means of welding 73, with the desired orientation. The plate 72 has at one end 74 a series of holes for connection by means of screw means to the angular structure 70 for fastening to the terminal.

Advantageously the fastening structure 70 has a stiffening gusset 75.

The contact pin 71 is fixed to the fastening structure 70 by means an angle-bar 76 connected via threaded means.

Advantageously a stud bolt 77 laterally connects the pin 71 to the fastening structure and to the plate 72 for fixing the rod 1, 2, 3, ensuring the required degree of clamping between the three conductive components necessary for good electrical transmission.

The operating mode is now described with reference to Figure 3.

For the sake of clarity of the explanation, only one line bay and transformer are described.

The support structures, indicated in their entirety by 25, support both the insulators 8 supporting the busbars R, S, T and the means for electrical connection to the line and to the transformer, not shown.

The terminals 10 of the insulators 8 form both the point for electrical connection of the lines and the transformers to the busbars R, S, T and the point for connection and structural support of the busbars R, S, T.

The various steps of assembly of a busbar, for example the busbar T for the electrical phase T, are now considered. Once the connections 20, 21 have been fixed to the terminals 10 of the insulators 8 of the bays, it is possible to adjust the height of the contact pin 71 and that of the rod 1, 2 previously welded onto the plate 72.

Adjustment is performed by rotating the angle-piece 70 of the connection 20, 21 on the terminal 10.

It is now possible to connect the clamp 50 to the free end of the rod 1, 2 by orienting the seat 53 for the busbar T so that it is aligned for all the clamps 50 of the rods 1, 2 supporting the busbar T present in all the bays.

The busbar T is then connected to the seats 53 of the clamps 50.

As the busbar T is connected to the clamps of the various bays, the desired arrangement of the busbar T is adjusted. Adjustment is performed by displacing and rotating the clamp 50 so that the rod 1, 2 slides in its seat 62 present on the clamp 50.

The electrical connection, between the line for the electrical phase T and the same phase of the transformer, is performed by connecting the electrical connection means of the line to the contact pin 71 located on the conductive connection 20 fixed to the terminal 10 of the insulator 8 of the line bay.

The connection 20 is electrically in contact with the conductive rod 1 which is oriented obliquely upwards and supports the busbar T. The rod 1 is, in turn, electrically in contact with the busbar T by means of the clamp 50.

Similarly the busbar T is electrically in contact by means of a second clamp 50 with the rod 2 oriented vertically. The vertical rod 2 is electrically in contact with the conductive connection 21 fixed to the terminal 10 of the insulator 8 of the transformer bay.

The contact pin 71 of the connection 21 is connected to the means for electrical connection of the phase T of the transformer.

The invention has been described with reference to particular and preferred embodiments, however it is not limited to what was described, but embraces the variants and modifications which will be evident to a person skilled in the art.

## Claims

1. High-voltage electrical conductor assembly for connecting several lines to transformers, comprising self-supporting busbars (R, S, T), conducting rods (1, 2, 3) for supporting said busbars (R, S, T), and support insulators (8), in which each busbar (R, S, T) is connected to two conducting rods (1, 2, 3), said conducting rods (1, 2, 3) being connected on one side to said support insulators (8) and at their free ends with said busbars (R, S, T), **characterized in that** orientable and adjustable articulated joints are provided at the connection points between the insulators (8) and the conducting rods (1, 2, 3) as well as between the conducting rods (1, 2, 3) and the busbars (R, S, T).

2. High-voltage electrical conductor assembly according to claim 1 **characterized in that** said conducting rods (1, 2, 3), said support insulators (8), and said orientable and adjustable articulated joints form an isostatic supporting structure.

3. High-voltage electrical conductor assembly according to claim 1 or 2, **characterized in that** the conducting rods (1, 2, 3) supporting a busbar (R, S, T) and the insulators (8) to which the rods (1, 2, 3) are connected are positioned in the same plane (7) transverse to the busbar (R, S, T).

4. High-voltage electrical conductor assembly according to one or more of the preceding claims **characterized in that** the busbars (R, S, T) are arranged, viewed in cross-section, at the vertices of an isosceles triangle (35).

5. High-voltage electrical conductor assembly according to one or more of the preceding claims, **characterized in that** the outside busbars (R, T) are aligned vertically with the support insulators (8).

6. High-voltage electrical conductor assembly according to one or more of the preceding claims, **characterized in that** the conducting rods (1, 2, 3) are connected to the busbars (R, S, T) with clamps (50) made of conductive material.

7. High-voltage electrical conductor assembly according to claim 6, **characterized in that** the clamps (50) have a roughly L-shaped body (51), **in that** the body has externally and longitudinally seats (53) for the busbars (R, S, T) and seats (61) for the rods (1, 2, 3) which are mutually perpendicular, and **in that** jaws (54, 60), connected facing the seats (53, 61), are provided with seats (55) for clamping the busbars (R, S, T) and the rods (1, 2, 3).

8. High-voltage electrical conductor assembly according to one or more of the preceding claims **characterized in that** the conducting rods (1, 2, 3) are connected to connections (20, 21, 22) fixed to the terminals (10) of the insulators (8), said connections (20, 21, 22) comprising an angular fastening structure (70) which is connected on one side to the terminal (10) and on the opposite side to a plate (72) for fixing the rods (1, 2, 3) and to an electrical contact pin (71).

9. High-voltage electrical conductor assembly according to claim 8, **characterized in that** the conducting rods (1, 2, 3) are welded onto a plate (72) oriented towards the busbar (R, S, T) to be supported.

10. High-voltage electrical conductor assembly according to claim 8, **characterized in that** the contact pin (71) is connected transversely to the side of the fastening structure (70) by means of an angle-bar (76).

11. High-voltage electrical conductor assembly according to claim 8, **characterized in that** stud bolts (77) connect with pressure the contact pin (71) to the plate (72) and the fastening structure (70).

12. High-voltage electrical conductor assembly according to claim 8, **characterized in that** the fastening structure (70) has a stiffening and reinforcing gusset (75).

13. High-voltage electrical conductor assembly according to one or more of the preceding claims **characterized in that** the busbars (R, S, T) are tubular.

14. High-voltage electrical conductor assembly according to one or more of the preceding claims **characterized in that** the cross-section of the busbars (R, S, T) coincides with the diameter of the cross-section of the rods (1, 2, 3).

15. High-voltage electrical conductor assembly according to one or more of the preceding claims **characterized in that** the insulators (8) are connected at the bottom to support structures (25) which are aligned in threes along two parallel rows.

## Patentansprüche

1. Elektrische Hochspannungsleiteranordnung zur Verbindung verschiedener Leitungen mit Transformatoren, welche selbststützende Stromschienen (R, S, T) aufweist, leitfähige Stangen (1, 2, 3) zum Stützen der Stromschienen (R, S, T) und Stützisolatoren (8), in welcher jede Stromschiene (R, S, T) mit zwei leitfähigen Stangen (1, 2, 3) verbunden ist, wobei die leitfähigen Stangen (1, 2, 3) auf einer Seite mit den Stützisolatoren (8) verbunden sind und an ihrem freien Ende mit den Stromschienen (R, S, T), **dadurch gekennzeichnet, dass** orientierbare und justierbare gelenkbildende Verbindungen bereitgestellt werden an den Verbindungspunkten zwischen den Isolatoren (8) und den leitfähigen Stangen (1, 2, 3), ebenso wie zwischen den leitfähigen Stangen (1, 2, 3) und den Stromschienen (R, S, T).

2. Elektrische Hochspannungsleiteranordnung nach Anspruch 1, **dadurch gekennzeichnet, dass** die leitfähigen Stangen (1, 2, 3), die Stützisolatoren (8) und die orientierbaren und justierbaren gelenkbildenden Verbindungen eine isostatische Stützstruktur bilden.

3. Elektrische Hochspannungsleiteranordnung nach Anspruch 1 oder 2, **dadurch gekennzeichnet, dass** die leitfähigen Stangen (1, 2, 3), welche eine Stromschiene (R, S, T) abstützen, und die Isolatoren (8), mit welchen die Stangen (1, 2, 3) verbunden sind, in derselben Ebene (7) quer zur Stromschiene (R, S, T) positioniert sind.

4. Elektrische Hochspannungsleiteranordnung nach einem oder mehreren der vorangehenden Anspruche, **dadurch gekennzeichnet, dass** die Stromschienen (R, S, T) im Querschnitt betrachtet an den Eckpunkten eines gleichschenkligen Dreiecks (35) angeordnet sind.

5. Elektrische Hochspannungsleiteranordnung nach einem oder mehreren der vorangehenden Ansprüche, **dadurch gekennzeichnet, dass** die Außenstromschienen (R, T) vertikal mit den Stützisolatoren (8) ausgerichtet sind.

6. Elektrische Hochspannungsleiteranordnung nach einem oder mehreren der vorangehenden Anspruche, **dadurch gekennzeichnet, dass** die leitfähigen Stangen (1, 2, 3) mit den Stromschienen (R, S, T) mit Klammern (50) verbunden sind, die aus leitfähigem Material hergestellt sind.

7. Elektrische Hochspannungsleiteranordnung nach Anspruch 6, **dadurch gekennzeichnet, dass** die Klammern (50) einen grob L-förmigen Körper (51) aufweisen, und dass der Körper externe und longitudinale Sitze (53) für die Stromschienen (R, S, T) aufweist und Sitze (61) für die Stangen (1, 2, 3), welche aufeinander senkrecht stehen, und dadurch dass Klemmbacken (54, 60) bereitgestellt sind, die so verbunden sind, dass sie den Sitzen (53, 61) gegenüberliegen mit Sitzen (55) zum Klemmen der Stromschienen (R, S, T) und der Stangen (1, 2, 3).

8. Elektrische Hochspannungsleiteranordnung nach einem oder mehreren der vorangehenden Ansprüche, **dadurch gekennzeichnet, dass** die leitfähigen Stangen (1, 2, 3) mit Verbindungen (20, 21, 22) verbunden sind, die an Anschlüssen (10) der Isolatoren (8) befestigt sind, wobei die Verbindungen (20, 21, 22) eine winkelförmige Befestigungsstruktur (70) aufweisen, welche an einer Seite mit dem Anschluss (10) und an der gegenüberliegenden Seite mit einer Platte (72) zur Befestigung der Stangen (1, 2, 3) verbunden ist und mit einem elektrischen Kontaktstift (71).

9. Elektrische Hochspannungsleiteranordnung nach Anspruch 8, **dadurch gekennzeichnet, dass** die leitenden Stangen (1, 2, 3) auf eine Platte (72) geschweißt sind, die in Richtung der Stromschiene (R, S, T) orientiert ist, welche abgestützt werden soll.

10. Elektrische Hochspannungsleiteranordnung nach Anspruch 8, **dadurch gekennzeichnet, dass** der Kontaktstift (71) quer mit der Seite der Befestigungsstruktur (70) mittels einer Winkelstange (67) verbunden ist.

11. Elektrische Hochspannungsleiteranordnung nach Anspruch 8, **dadurch gekennzeichnet, dass** Druckbolzen (67) mit Druck den Kontaktstift (71) mit der Platte (72) und der Befestigungsstruktur (70) verbinden.

12. Elektrische Hochspannungsleiteranordnung nach Anspruch 8, **dadurch gekennzeichnet, dass** die Befestigungsstruktur (70) eine versteifende und verstärkende Verstärkung (75) aufweist.

13. Elektrische Hochspannungsleiteranordnung nach einem oder mehreren der vorangehenden Ansprüche, **dadurch gekennzeichnet, dass** die Stromschienen (R, S, T) röhrenförmig sind.

14. Elektrische Hochspannungsleiteranordnung nach einem oder mehreren der vorangehenden Ansprüche, **dadurch gekennzeichnet, dass** der Querschnitt der Stromschienen (R, S, T) mit dem Durchmesser des Querschnitts der Stangen (1, 2, 3) übereinstimmt.

15. Elektrische Hochspannungsleiteranordnung nach einem oder mehreren der vorangehenden Ansprüche, **dadurch gekennzeichnet, dass** die Isolatoren (8) an der Unterseite mit Stützstrukturen (25) verbunden sind, welche in Dreiergruppen entlang zwei parallelen Reihen ausgerichtet sind.

## Revendications

1. Ensemble de conducteurs électriques à haute tension destinés à connecter plusieurs lignes électriques aux transformateurs, comprenant des barres omnibus autoporteuses (R, S, T), des tiges conductrices (1, 2, 3) destinées à supporter lesdites barres omnibus (R, S, T) et des isolateurs (8) de support, dans lesquels chaque barre omnibus (R, S, T) est connectée à deux tiges conductrices (1, 2, 3), lesdites tiges conductrices (1, 2, 3) étant connectées à un côté desdits isolateurs (8) de support et au niveau de leurs extrémités libres avec lesdites barres omnibus (R, S, T), **caractérisé en ce que** les joints articulés orientables et réglables sont disposés au niveau de points de connexion entre les isolateurs (8) et les tiges conductrices (1, 2, 3) de même qu'entre les tiges conductrices (1, 2, 3) et les barres omnibus (R, S, T).

2. Ensemble de conducteurs électriques à haute tension selon la revendication 1, **caractérisé en ce que** lesdites tiges conductrices (1, 2, 3), lesdits isolateurs (8) de support et lesdits joints articulés orientables et réglables constituent une structure de support isostatique.

3. Ensemble de conducteurs électriques à haute tension selon la revendication 1 ou 2, **caractérisé en ce que** les tiges conductrices (1, 2, 3) qui supportent une barre omnibus (R, S, T) et les isolateurs (8) auxquels les tiges (1, 2, 3) sont connectées sont positionnés dans le même plan (7) transversal par rapport à la barre omnibus (R, S, T).

4. Ensemble de conducteurs électriques à haute tension selon l'une ou plusieurs des revendications précédentes, **caractérisé en ce que** les barres omnibus (R, S, T) sont agencées, lorsqu'elles sont regardées en coupe transversale, aux sommets d'un triangle isocèle (35).

5. Ensemble de conducteurs électriques à haute tension selon l'une ou plusieurs des revendications précédentes, **caractérisé en ce que** les barres omnibus extérieures (R, T) sont alignées verticalement avec les isolateurs (8) de support.

6. Ensemble de conducteurs électriques à haute tension selon l'une ou plusieurs des revendications précédentes, **caractérisé en ce que** les tiges conductrices (1, 2, 3) sont connectées aux barres omnibus (R, S, T) avec des brides de serrage (50) composées d'un matériau conducteur.

7. Ensemble de conducteurs électriques à haute tension selon la revendication 6, **caractérisé en ce que** les brides de serrage (50) possèdent un corps (51) à peu près en forme de L, **en ce que** le corps possède de façon externe et longitudinale des sièges (53) pour les barres omnibus (R, S, T) et des sièges (61) pour les tiges (1, 2, 3) qui sont mutuellement perpendiculaires, et **en ce que** les mâchoires (54, 60) connectées et faisant face aux sièges (53, 61) sont munies de sièges (55) afin de serrer les barres omnibus (R, S, T) et les tiges (1, 2, 3).

8. Ensemble de conducteurs électriques à haute tension selon l'une ou plusieurs des revendications précédentes, **caractérisé en ce que** les tiges conductrices (1, 2, 3) sont connectées aux connexions (20, 21, 22) et fixées aux bornes (10) des isolateurs (8), lesdites connexions (20, 21, 22) comprenant une structure (70) de fixation angulaire qui est connectée à un côté de la borne (10) et sur le côté opposé d'une plaque (72) afin de fixer les tiges (1, 2, 3) et à une broche (71) de contact électrique.

9. Ensemble de conducteurs électriques à haute tension selon la revendication 8, **caractérisé en ce que** les tiges conductrices (1, 2, 3) sont soudées sur une plaque (71) orientée vers la barre omnibus (R, S, T) à supporter.

10. Ensemble de conducteurs électriques à haute tension selon la revendication 8, **caractérisé en ce que** la broche de contact (71) est connectée transversalement au côté de la structure (70) de fixation à l'aide d'une cornière (76).

11. Ensemble de conducteurs électriques à haute tension selon la revendication 8, **caractérisé en ce que** des goujons (77) connectent par pression la broche de contact (71) à la plaque (72) et la structure (70) de fixation.

12. Ensemble de conducteurs électriques à haute tension selon la revendication 8, **caractérisé en ce que** la structure (70) de fixation possède un gousset (75) de raidissement et de renforcement.

13. Ensemble de conducteurs électriques à haute tension selon l'une ou plusieurs des revendications précédentes, **caractérisé en ce que** les barres omnibus (R, S, T) sont tubulaires.

14. Ensemble de conducteurs électriques à haute tension selon l'une ou plusieurs des revendications précédentes, **caractérisé en ce que** la coupe transversale des barres omnibus (R, S, T) coïncide avec le diamètre de la coupe transversale des tiges (1, 2, 3).

15. Ensemble de conducteurs électriques à haute tension selon l'une ou plusieurs des revendications précédentes, **caractérisé en ce que** les isolateurs (8) sont connectés dans le bas des structures (25) de support qui sont alignées par trois le long de deux lignes parallèles.
